# EUROPÄISCHE PATENTSCHRIFT

(11) **EP 1 597 470 B1**
(45) Veröffentlichungstag und Bekanntmachung des Hinweises auf die Patenterteilung: **25.03.2015**
(21) Anmeldenummer: 03769229.0
(22) Anmeldetag: 08.10.2003
(51) Int. Cl.: F02D 41/26, F02P 5/152, G01L 23/22

(54) **SIGNALVERARBEITUNGSVORRICHTUNG UND STEUERGERÄT ZUR ZUSAMMENARBEIT MIT EINER SIGNALVERARBEITUNGSVORRICHTUNG**
SIGNAL PROCESSING DEVICE AND CONTROL UNIT FOR CO-OPERATING WITH A SIGNAL PROCESSING DEVICE
DISPOSITIF DE TRAITEMENT DE SIGNAUX ET APPAREIL DE COMMANDE DESTINE A COOPERER AVEC UN DISPOSITIF DE TRAITEMENT DE SIGNAUX

(30) Priorität: 07.01.2003 DE 10300133
(43) Veröffentlichungstag der Anmeldung: 23.11.2005
(73) Patentinhaber: ROBERT BOSCH GMBH, 70442 Stuttgart (DE)
(72) Erfinder: TORNO, Oskar, 71701 Schwieberdingen (DE); KLUTH, Carsten, 70469 Stuttgart (DE); HAEMING, Werner, 74861 Neudenau (DE); RIDDERBUSCH, Heiko, 70567 Stuttgart-Moehringen (DE); VLAD, Crina, 70184 Stuttgart (DE)
(86) Internationale Anmeldenummer: PCT/DE2003/003328
(87) Internationale Veröffentlichungsnummer: WO 2004/061283

(56) Entgegenhaltungen:
- EP-A- 0 539 071
- EP-A- 0 592 983
- DE-A- 10 065 297
- DE-A- 10 119 196
- DE-A- 10 138 110
- DE-A1- 10 036 643

## Beschreibung

Die Erfindung geht aus von einer Signalverarbeitungsvorrichtung nach der Gattung des unabhängigen Patentanspruchs.

Aus der DE 101 38 110 sind bereits eine Signalverarbeitungseinrichtung und ein Steuergerät zur Zusammenarbeit mit einer Signalverarbeitungseinrichtung bekannt, wobei die Signalverarbeitungseinrichtung zur Verarbeitung von Klopfsignalen einer Brennkraftmaschine ausgebildet ist. Die Signalverarbeitungseinrichtüng weist einen Filter auf, durch den die Klopfsignale der Brennkraftmaschine verarbeitet werden. Von dem Steuergerät werden Steuerinformationen zur Verfügung gestellt, durch die die Eigenschaften des Filters beeinflussbar sind. Insbesondere kann dabei die Frequenz eines Durchlassbereiches des Filters beeinflusst werden.

Aus der EP 539 071 A2 ist bereits eine Signalverarbeitungsvörrichtung zur Verarbeitung von Klopfsignalen einer Brennkraftmaschine bekannt, die einen Filter aufweist, dessen Eigenschaften durch Filterkoeffizienten beeinflussbar sind.

Aus der DE 100 36 643 A1 ist bereits die Verwendung eines digitalen Code und die Verwendung von fehlererkennenden Bits in dem Code bekannt.

### Vorteile der Erfindung

Die erfindungsgemäße Signalverarbeitungsvorrichtung zur Verarbeitung von Klopfsignalen einer Brennkraftmaschine, die von Klopfsensoren zur Verfügung gestellt werden, mit mindestens einem Filter zur Filterung der Klopfsignale, wobei die Eigenschaften des Filters durch Filterkoeffizienten beeinflussbar sind, die in einem Speicher in der Signalverarbeitungsvorrichtung gespeichert sind und wobei Mittel vorhanden sind, durch die die gespeicherten Filterkoeffizienten auf ihre Richtigkeit überprüft werden, wobei die erfindungsgemäße Signalverarbeitungsvorrichtung dadurch gekennzeichnet ist, dass die Filterkoeffizienten als binärer fehlererkennender Code vorliegen, dass Mittel vorgesehen sind, die eine Überprüfung der Filterkoeffizienten anhand des Fehler erkennenden Codes vornehmen und Ersatzmaßnahmen einleiten, wenn die Überprüfung ergibt, dass die Filterkoeffizienten nicht richtig sind, und dass als Ersatzmaßnahme Ersatzwerte für die Filterkoeffizienten verwendet werden, wobei die Ersatzwerte aus dem Speicher ausgelesen werden oder aus Filterkoeffizienten, die nicht fehlerhaft sind, berechnet werden, hat den Vorteil, dass eine erhöhte Sicherheit bei der Verarbeitung von Klopfsignalen bei gleichzeitig großer Flexibilität der Filter gewährleistet wird. Besonders vorteilhaft ist dies, wenn besonders komplexe Filterfunktionen durch eine Vielzahl von Steuerinformationen realisiert werden. Auch teilweise Abänderungen der Steuerinformationen können dabei zu gravierend unterschiedlichen Eigenschaften der Filter führen.

Vorteilhafte Weiterbildungen und Verbesserungen ergeben sich durch die Merkmale der abhängigen Patentansprüche. Es ist insbesondere vorteilhaft, wenn die Signalverarbeitungsvorrichtung Steuerinformationen, die es von dem Steuergerät erhält, überprüft. Weiterhin können auch die in der Signalverarbeitungsvorrichtung gespeicherten Steuerinformationen bei jeder Verwendung auf ihre Konsistenz hin untersucht werden. Es können so fehlerhafte Speicherbereiche identifiziert werden. Dies gilt insbesondere, wenn die Steuerinformationen eine Vielzahl von Filterkoeffizienten beinhalten.

### Zeichnungen

Ausführungsbeispiele der Erfindung sind in den Zeichnungen dargestellt und in der nachfolgenden Beschreibung näher erläutert. Es zeigen:
- Figur 1: mehrere Klopfsensoren, eine Signalverarbeitungsvorrichtung und ein Steuergerät,
- Figur 2: zeigt Filterkoeffizienten, die für den Filter der Signalverarbeitungsvorrichtung verwendet werden,
- Figur 3, 4 und 5: verschiedene Verfahren, die von der erfindungsgemäßen Signalverarbeitungsvorrichtung bzw. dem erfindungsgemäßen Steuergerät ausgeführt werden.

### Beschreibung

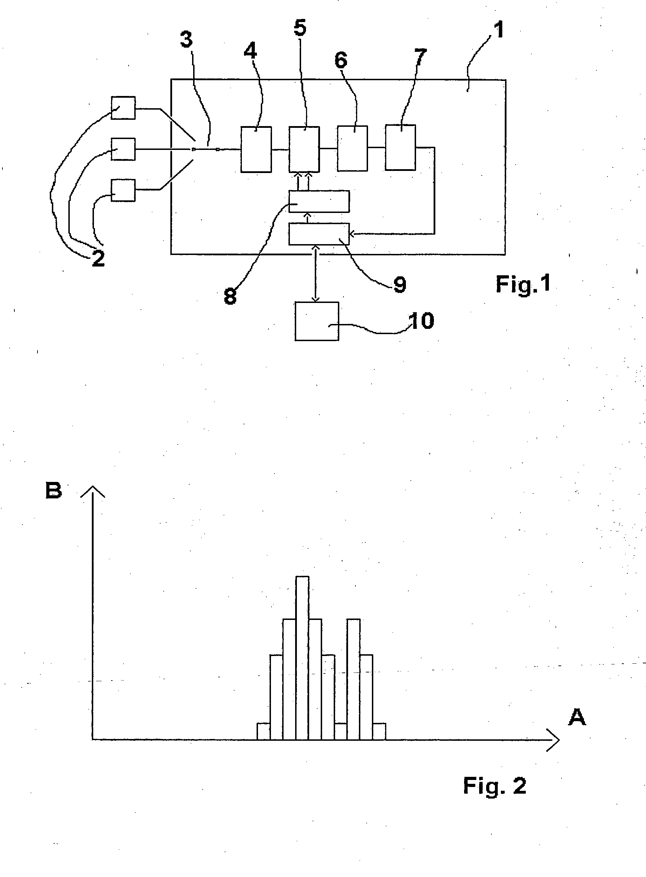

In der Figur 1 wird schematisch eine Signalverarbeitungsvorrichtung 1 zur Auswertung der Signale von Klopfsensoren 2 und weiterhin ein Steuergerät 10 gezeigt. Die Klopfsensoren 2 sind in üblicher Weise an einer hier nicht dargestellten Brennkraftmaschine angebracht. Die Klopfsensoren 2 liefern Klopfsignale, d. h. Signale, die Aufschluss über den Verbrennungsverlauf in den Zylindern der Brennkraftmaschine geben. Insbesondere kann dabei eine unerwünscht hohe Druckerhöhung, die beispielsweise durch Selbstentzündung des Gemischs auftritt (sogenanntes Klopfen) erkannt werden. Die Signale dieser Klopfsensoren werden der Signalverarbeitungsvorrichtung 1 zugeführt und dort weiter verarbeitet. Die Signalverarbeitungsvorrichtung 1 weist eine Vielzahl von Eingängen für die Klopfsensoren 2 auf.

Den Eingängen nachgeordnet ist zunächst ein Multiplexer 3, d. h. eine Vorrichtung, die aus den Signalen der verschiedenen Klopfsensoren 2 ein geeignetes Signal auswählt. Dies liegt darin begründet, dass die Verbrennungsvorgänge in den Zylindern nicht zeitgleich, sondern sequentiell nacheinander erfolgen, so dass keine parallele Verarbeitung der Signale aller Klopfsensoren 2 gleichzeitig erforderlich ist, sondern diese nacheinander verarbeitet werden können. Dem Multiplexer 3 nachgeordnet ist ein Verstärker 4, in dem die Signale der Klopfsensoren 2 verstärkt werden. Dem Verstärker 4 nachgeordnet ist ein Filter 5, bei dem eine Filterung der Signale des Klopfsensors erfolgt. Da die Klopfsignale, d. h. die Signale der anormalen Verbrennungsvorgänge eine bestimmte Frequenz aufweisen, ist dieser Filter 5 frequenzselektiv ausgestaltet, d. h. nur die Signale mit bestimmten Frequenzen werden durchgelassen. Dem Filter 5 nachgeordnet ist ein Gleichrichter 6, in dem die Klopfsignale gleichgerichtet werden. Dem Gleichrichter 6 nachgeordnet ist ein Integrator 7, in dem die Klopfsignale über einen bestimmten Zeitraum aufintegriert werden. Das so aufintegrierte Signal ist ein Maß für die aufgetretene Intensität der Klopfsignale, d. h. für das Vorliegen von klopfenden Verbrennungsvorgängen in den Zylindern, denen jeweils die Klopfsensoren 2 zugeordnet sind. Durch einen Vergleich des aufintegrierten Signals mit einem Vergleichswert kann so ermittelt werden, ob eine klopfende Verbrennung vorlag oder nicht. Das aufintegrierte Klopfsignal, wie es am Ausgang des Integrators 7 anliegt, wird dann an eine Schnittstelle 9 weitergegeben. Die Schnittstelle 9 ist zur Kommunikation mit dem externen Steuergerät 10 ausgebildet und kann so das aufintegrierte Klopfsignal an das Steuergerät 10 übermitteln. Vorzugsweise ist die Schnittstelle 9 als serielle Schnittstelle ausgebildet. Weiterhin ist die Schnittstelle 9 mit einem Speicher 8 verbunden. In diesem Speicher 8 sind Filterkoeffizienten zur Beeinflussung des Filters 5 vorgesehen. Diese Filterkoeffizienten werden in der Figur 2 noch näher erläutert.

In der Figur 1 sind Signalverarbeitungsvorrichtung 1 und Steuergerät 10 als zwei getrennte Einheiten dargestellt. In vielen praktischen Anwendungsfällen werden diese beiden Geräte auch in unterschiedlichen Gehäusen separat vorgesehen sein. Es ist aber ebenso möglich beide Geräte 1 und 10 in einem Gehäuse und beispielsweise mit einer gemeinsamen Stromversorgung vorzusehen. Auch in diesem Fall würde die Kommunikation zwischen Signalverarbeitungsvorrichtung 1 und Steuergerät 10 über einen Bus erfolgen, wobei dabei das "Steuergerät" der Hauptrechner in dem gemeinsamen Gehäuse wäre. Der Vorteil einer Anordnung in einem gemeinsamen Gehäuse liegt in dem kostengünstigen Aufbau. Die Signalverarbeitungsvörrichtung 1 kann dabei einfach als zusätzliches Modul mit einem Steuergerät 10 zusammengefügt werden.

Der Aufbau mit Multiplexer 3, Verstärker 4, Filter 5, Gleichrichter 6, Integrator 7 entspricht dem Aufbau, wie er bereits aus der DE 101 38 110 A1 bekannt ist. Diese Elemente sind hier als diskrete Elemente dargestellt. Ebenso gut kann es sich hier jedoch auch um Software handeln, insbesondere die Funktionalitäten des Filters 5 können besonders einfach durch eine entsprechende Software abgebildet werden. Dazu müssen die Klopfsignale als digitale Signale vorliegen. Es müssen daher Analog-Digital-Wandler vorgesehen sein, die eine entsprechende Umwandlung der Signale der Klopfsensoren 2 bewirken. Dem Fachmann ist klar, dass eine Vielzahl von möglichen Anordnungen dieser Analog-Digital-Wandler möglich ist. Beispielsweise können diese direkt in den Klopfsensoren 2 angeordnet sein. Alternativ ist beispielsweise auch eine Anordnung eines Analog-Digital-Wandlers zwischen Verstärker 4 und Filter 5 möglich.

Zwischen der Schnittstelle 9 und dem Steuergerät 10 werden über Busleitungen 11 Nachrichten ausgetauscht. Zum Einen werden von dem Steuergerät 10 an die Schnittstelle 9 und somit an die Signalverarbeitungsvorrichtung 1 Filterkoeffizienten übertragen. Erfindungsgemäß wird nun vorgeschlagen, diese Übertragung der Filterkoeffizienten zu überprüfen, d. h. sicherzustellen, dass die Filterkoeffizienten richtig übertragen wurden. Weiterhin werden die so übertragenen Filterkoeffizienten in dem Speicher 8 abgelegt, um dann bei jedem Filtervorgang durch den Filter 5 zur Verfügung gestellt zu werden. Der Speicher 8 ist somit dazu ausgebildet, von der Schnittstelle 9 Daten zu empfangen und diese zu speichern. Üblicherweise erfolgt die Übertragung von Filterkoeffizienten von dem Steuergerät 10 zur Signalverarbeitungsvorrichtung 1 während einer Initialisierung, d. h. bei einem Start des Kraftfahrzeugs wird das Steuergerät 10 und auch die Signalverarbeitungsvorrichtung 1 zurückgesetzt und es werden dann von dem Steuergerät 10 Filterkoeffizienten übertragen. Diese werden dann im Speicher 8 abgelegt. Die in dem Speicher 8 abgelegten Filterkoeffizienten können durch Störungen einzelner Speicherzellen verändert werden. Es ist daher auch wünschenswert, die Speicherinhalte des Speichers 8 einer konstanten Überprüfung zu unterziehen, um so sicherzustellen, das die Filterkoeffizienten durch einen Ausfall oder eine Veränderung einer Speicherzelle nicht verändert wurden. Erfindungsgemäß wird daher eine Überprüfung der im Speicher 8 abgelegten Filterkoeffizenten vorgeschlagen.

Es wird daher vorgeschlagen, die Filterkoeffizienten durch einen entsprechenden binären Code darzustellen, wobei der binäre Code zumindest als fehlererkennender Code ausgebildet ist. Übliche fehlererkennende Codes weisen beispielsweise ein Paritäts-Bit auf. Bei einem einzelnen Paritäts-Bit können Veränderungen von einzelnen Bits zuverlässig erkannt werden. Bei derart codierten Filterkoeffizienten kann dann sowohl bei der Übertragung von dem Steuergerät 10 zur Schnittstelle 9 wie auch im Speicher 8 überprüft werden, ob die übertragenen bzw. gespeicherten Filterkoeffizienten perfekt sind. Sobald ein Fehler dieser Filterkoeffizienten festgestellt wird, werden Ersatzmaßnahmen vorgenommen, um sicherzustellen, dass durch die Klopfregelung anormale Verbrennungsvorgänge noch sicher erkannt werden, oder aber, dass der Motor nicht in Betriebszuständen betrieben wird, in denen derartige Verbrennungsvorgänge auftreten können. Entsprechend wird bei jeder Übertragung von Filterkoeffizenten und entweder bei jedem Filtervorgang oder von Zeit zu Zeit (nach jedem zehnten Filtervorgang) überprüft, ob die in dem Speicher 8 abgelegten Filterkoeffizienten noch korrekt sind oder durch einen Fehler von Speicherzellen eine Veränderung dieser Daten erfolgt ist. Auch dies erfolgt wiederum dadurch, dass die mit dem fehlererkennenden Code abgelegten Daten überprüft werden, beispielsweise durch den Vergleich eines Parity-Bit mit den dazugehörigen Daten.

Weiterhin sollten auch die Rückmeldungen der Signalverarbeitungseinrichtung 1 zurück an das Steuergerät 10 überprüft werden. In einem besonders einfachen Fall kann von der Signalverarbeitungsvorrichtung 1 einfach der aufintegrierte Wert an das Steuergerät 10 übertragen werden, wie er vom Integrator 7 in einem vorgegebenen Zeitintervall ermittelt wird. Alternativ ist es auch möglich, die Daten erst einer gewissen Vorverarbeitung in der Signalverarbeitungsvorrichtung 1 zu unterziehen und dann die so bearbeiteten Daten an das Steuergerät 10 zu übertragen. Auch hier sollten die Informationen, die von der Schnittstelle 9 an das Steuergerät gesandt werden, mit einem entsprechenden fehlererkennenden Code codiert sein, um dann in dem Steuergerät festzustellen, ob die Daten richtig übertragen wurden oder nicht. Insbesondere in einem Kraftfahrzeug kann es immer wieder zu Störungen der Übertragung zwischen der Schnittstelle 9 und dem Steuergerät 10 kommen. In Abhängigkeit von der Häufigkeit von Fehlern können dann unterschiedliche Maßnahmen getroffen werden. Beim Auftreten von einzelnen Fehlern bei der Übertragung kann beispielsweise einfach der derzeitige Zündwinkelwert, der aus der Klopfregelung hervorgeht, eingefroren werden, d. h. es erfolgt dann insbesondere keine Frühverstellung des Zündwinkels mehr, die sonst aufgrund ausbleibender Klopfereignisse erfolgt. Wenn die Gesamtzahl der Fehler jedoch einen bestimmten Wert überschreitet, wird durch das Steuergerät 10 ein sicherer Betriebsbereich angesteuert, d. h. es werden ausschließlich Zündwinkel verwendet, bei denen die Gefahr von unerwünschten Verbrennungsvorgängen in den Zylindern ausgeschlossen ist.

Weiterhin ist es auch möglich, für jeden einzelnen Verbrennungsvorgang Steuersignale von dem Steuergerät 10 an die Signalverarbeitungsvorrichtung 1 zu übermitteln. Auch die so übermittelten Steuerdaten müssen dann überwacht werden, ob es zu Störungen bei der Datenübertragung kommt.

In der Figur 2 wird in einem Diagramm ein Satz von Filterkoeffizienten für den Filter 5 gezeigt. Auf der Achse A sind Frequenzen aufgetragen, auf der Achse B sind Verstärkungsfaktoren aufgetragen. Wie zu erkennen ist, bestehen die Filterkoeffizienten aus Verstärkungsfaktoren, die jeweils bestimmten Frequenzbereichen zugeordnet sind. Die Filterkoeffizienten beinhalten somit Informationen darüber, welchem Frequenzbereich sie zuzuordnen sind und wie stark die Verstärkung für diesen betreffenden Frequenzbereich ist. Üblicherweise wird dies durch binäre Zahlen angegeben. Beispielsweise können durch eine 8 Bit breite Binärzahl Verstärkungsintensitäten zwischen 0 und 255 codiert werden.

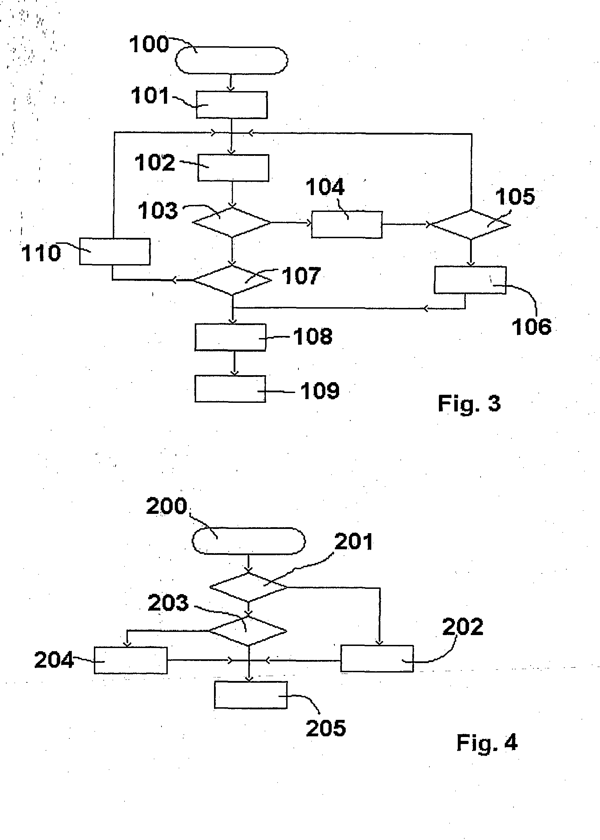

In der Figur 3 wird ein erstes Verfahren dargestellt, mit dem die zuverlässige Übertragung der Filterkoeffizienten zwischen dem Steuergerät 10 und der Signalverarbeitungsvorrichtung 1 überprüft wird. Dabei wird davon ausgegangen, dass zu einem Start eines Kraftfahrzeugs ein kompletter Satz von Filterkoeffizienten von dem Steuergerät 10 zur Signalverarbeitungsvorrichtung übertragen werden und dass diese Daten überprüft werden. In einem ersten Verfahrensschritt 100 erfolgt ein Start des gesamten Systems, indem sowohl das Steuergerät 10 wie auch die Signalverarbeitungsvorrichtung 1 zurückgesetzt werden. Üblicherweise wird dieser Schritt 100 durch den Start der Brennkraftmaschine ausgelöst. Im darauf folgenden Schritt 101 wird dann die Übertragung der Filterkoeffizienten aktiviert. Weiterhin wird ein Zähler, der die Anzahl der erfolgreich übertragenen Filterkoeffizienten zählt, auf einen Startwert gesetzt. In dem darauf folgenden Verfahrensschritt 102 wird ein erster Block von Filterkoeffizienten von dem Steuergerät 10 zur Schnittstelle 9 übertragen. Üblicherweise besteht ein derartiger Block von Filterkoeffizienten aus einem Filterkoeffizienten und einem entsprechenden Prüfbit, beispielsweise einem Parity-Bit. Im darauf folgenden Schritt 103 erfolgt eine Überprüfung, ob der Block von Filterkoeffizienten fehlerfrei übertragen wurde. Dies erfolgt insbesondere anhand der Prüfbits. Wenn diese Überprüfung ergibt, dass die Übertragung fehlerfrei war, folgt darauf der Block 107, in dem überprüft wird, ob nun alle Filterkoeffizienten übertragen wurden. Dies erfolgt insbesondere anhand des Zählers für die Filterkoeffizienten, der im Programmblock 101 auf einen Anfangswert gesetzt wurde. Sofern noch nicht alle Filterkoeffizienten übermittelt wurden, folgt darauf der Programmblock 110, bei dem der entsprechende Zähler für die Filterkoeffizienten weitergezählt wird. Darauf folgt dann die Übertragung des nächsten Blocks von Filterkoeffizienten im entsprechenden Schritt 102. Falls in dem Schritt 103 festgestellt wird, dass der oder die Filterkoeffizienten des Blocks nicht fehlerfrei übertragen wurden, so folgt der Schritt 104. Im Schritt 104 wird ein Fehlerzähler erhöht. Im darauf folgenden Schritt 105 wird der Fehlerzähler abgefragt und insbesondere mit einem Vergleichswert verglichen. Wenn der Fehlerzähler noch unterhalb des Vergleichswerts liegt, folgt auf den Schritt 105 der Schritt 102, d. h. es wird erneut versucht, die entsprechenden Filterkoeffizienten zu übertragen. Wenn in dem Schritt 105 festgestellt wird, dass der Fehler bereits mehrmals hintereinander aufgetreten ist, insbesondere dass der Fehlerzähler einen bestimmten Vergleichswert überschreitet, so folgt der Schritt 106. Im Schritt 106 wird festgestellt, dass die Übertragung der Filterkoeffizienten fehlerbehaftet ist. Aufgrund dieser Feststellung können dann Ersatzmaßnahmen eingeleitet werden. Auf den Schritt 106 und auch auf den Schritt 107 erfolgt der Schritt 108, in dem die Beendigung der Übertragung der Filterkoeffizienten durch Setzen eines entsprechenden Parameters festgeschrieben wird. Je nachdem, ob die Übertragung erfolgreich oder fehlerhaft war, erfolgen dann weitere Verfahren, die entweder die erfolgreich übertragenen Filterkoeffizienten nutzen, oder aber Ersatzmaßnahmen einleiten. Auf den Schritt 108 erfolgt der Schritt 109, bei dem das Verfahren zur Übertragung von Filterkoeffizienten beendet wird.

Durch das in der Figur 3 beschriebene Verfahren wird somit sichergestellt, dass bei der Übertragung der Filterkoeffizienten vom Steuergerät zur Signalverarbeitungsvorrichtung keine Veränderung der Filterkoeffizienten erfolgt. Da durch die Veränderung von einzelnen Bits bereits gravierende Abweichungen bei dem Filterkoeffizienten auftreten können, wird so sichergestellt, dass die Filterkoeffizienten richtig übertragen wurden. Das Verfahren nach Figur 3 ist vor allen Dingen dafür gedacht, wenn zu Beginn des Starts der Brennkraftmaschine ein kompletter Satz von Filterkoeffizienten übertragen wird, der dann für den weiteren Betrieb verwendet wird. Dieser komplette Satz an Filterkoeffizienten wird dann in dem Speicher 8 der Signalverarbeitungsvorrichtung 1 abgelegt und im laufenden Betrieb für den Filter 5 verwendet.

In der Figur 4 wird ein weiteres Verfahren dargestellt, welches zur Überprüfung der in dem Speicher 8 gespeicherten Filterkoeffizienten für den Filter 5 dient. Störungen können nämlich nicht nur bei der Übertragung der Daten vom Steuergerät zur Schnittstelle 9, sondern auch im Speicher 8 selbst entstehen. Dazu wird bei jedem Aufruf von Filterkoeffizienten aus dem Speicher 8 überprüft, ob die Filterkoeffizienten mit den dazu ebenfalls abgespeicherten Fehlererkennungsbits, insbesondere Paritäts-Bits, passen. Immer wenn hier eine Abweichung festgestellt wird, wird der fehlerhafte Koeffizient erneut vom Steuergerät 10 an die Signalverarbeitungseinrichtung 1 übertragen. In der Figur 4 wird nun ein Verfahren beschrieben, bei dem beobachtet wird, ob die Zahl derartiger Fehler in einem Beobachtungszeitraum, beispielsweise 250 Filtervorgängen, einen Schwellwert überschreitet. Dazu wird im Schritt 200 jeweils nach der vorgegebenen Zahl von Filtervorgängen bzw. Zündvorgängen der Brennkraftmaschine das in der Figur 4 gezeigte Verfahren gestartet. Nach dem Start im Block 200 folgt der Schritt 201, in dem die Anzahl der Fehler mit einem vorgegebenen Schwellwert verglichen wird. Die Fehleranzahl wird immer dann erhöht, wenn beim Auslesen eines Filterkoeffizienten aus dem Speicher 8 eine Unstimmigkeit zwischen dem gespeicherten Filterkoeffizienten und dem dazugehörigen Paritäts-Bit festgestellt wurde. Wenn die Zahl der Fehler über dem Schwellwert liegen, folgt auf den Schritt 201 der Schritt 202. Im Schritt 202 wird dann eine Anzeige gesetzt, durch die angezeigt wird, dass die Zähl der Fehler den Schwellwert überschreiten. Wenn im Schritt 201 die Anzahl der aufgetretenen Fehler noch unter dem Schwellwert liegen, folgt auf den Schritt 201 der Schritt 203. In dem Schritt 203 wird festgestellt, ob die Anzahl der aufgetretenen Fehler unter einem zweiten Schwellwert liegen. Der zweite Schwellwert ist natürlich geringer als der Schwellwert, der in der Figur 201 überprüft wurde. Vorzugsweise wird im Block 203 festgestellt, dass überhaupt keine Fehler in dem letzten Beobachtungszeitraum aufgetreten sind. Wenn dies der Fall ist, folgt auf den Schritt 202 der Schritt 204, in dem der Anzeiger, der einen Fehler anzeigt, zurückgesetzt wird. Wenn im Block 203 nicht festgestellt wird, dass die Anzahl der Fehler unter einem zweiten Schwellwert liegen bzw. in dem Beobachtungszeitraum überhaupt keine Fehler aufgetreten sind, so folgt auf den Schritt 203 unmittelbar der Schritt 205, in dem das Verfahren nach der Figur 4 beendet wird. Auf die Schritte 202, 204 folgt ebenfalls der Schritt 205, d. h. das Verfahren wird beendet.

Durch das Verfahren nach der Figur 4 wird somit, wenn der Fehler über einer ersten Schwelle liegt, ein Anzeiger gesetzt, aufgrund dessen dann Ersatzmaßnahmen zur üblichen Klopfregelung vorgesehen werden. Nur wenn die Anzahl der Fehler in dem Beobachtungszeitraum unter einen zweiten kleineren Wert fallt, werden diese Ersatzmaßnahmen dann wieder gestoppt. Vorzugsweise ist dabei vorgesehen, dass die Ersatzmaßnahmen nur dann gestoppt werden, wenn in dem Beobachtungszeitraum überhaupt kein Fehler aufgetreten ist.

Als Ersatzmaßnahmen sind verschiedene Vorgehensweisen vorstellbar. Zum Einen kann vorgesehen werden, die Brennkraftmaschine nur noch in einem Betriebsbereich zu betreiben, in dem kein Klopfen mehr auftritt. Insbesondere ist dabei an eine Sicherheitsspätverstellung des Zündwinkels gedacht. Alternativ kann auch festgestellt werden, in welchem Bereich des Speichers immer wieder ein Fehler auftritt, und es kann dieser Bereich des Speichers gesperrt werden. Es können dann alternativ andere Filterkoeffizienten, z. B. Standardfilterkoeffizienten verwendet werden, oder aber es kann ein anderer Bereich des Speichers 8 für die Abspeicherung der Filterkoeffizienten Verwendung finden. In diesem Fall werden dann die Filterkoeffizienten zuvor noch einmal vom Steuergerät angefordert.

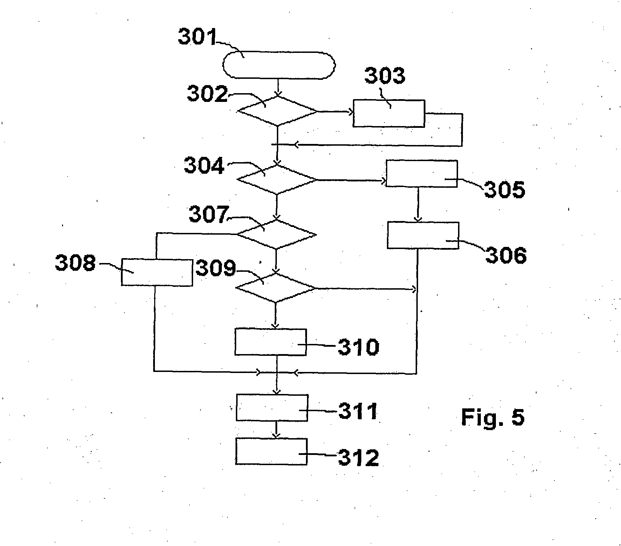

In der Figur 5 wird ein weiteres Verfahren zur Überprüfung der Kommunikation zwischen Signalverarbeitungsvorrichtung 1 und Steuergerät 10 dargestellt. Dieses Verfahren geht davon aus, dass für jeden Messvorgang Steuerdaten von dem Steuergerät 10 an die Signalverarbeitungsvorrichtung 1 übertragen werden. Das Verfahren nach der Figur 5 wird mit dem Block 301 am Ende jedes Messfensters gestartet, d. h. immer dann, wenn der Integrator 7 ein Integrationsergebnis vorliegen hat und dies über die Schnittstelle 9 an das Steuergerät 10 gesendet wird. Es wird dann im darauf folgenden Schritt 302 untersucht, ob bei der Übertragung der Botschaft ein Fehler aufgetreten ist. Dies erfolgt beispielsweise dadurch, dass die Konsistenz von Paritäts-Bits und der Nachricht betrachtet wird. Wenn dabei festgestellt wird, dass bei der Übertragung der Botschaft ein Fehler aufgetreten ist, so folgt der Schritt 303. In dem Schritt 303 wird ein Sperrzähler auf einen vorgegebenen Wert, beispielsweise 3 gesetzt. Nach dem Schritt 303 folgt dann der Schritt 304. Sofern beim Schritt 302 festgestellt wurde, dass kein Fehler in der von der Signalverarbeitungsvorrichtung zum Steuergerät 10 gesandten Nachricht vorliegt, folgt ebenfalls der Schritt 304. In dem Schritt 304 wird überprüft, ob die bei der Berechnung des Integrationsergebnisses verwendeten Filterkoeffizienten korrekt waren, d. h. entweder, ob die für die betreffende Messung übermittelten Steuerdaten korrekt waren oder die aus dem Speicher 8 ausgelesenen Filterkoeffizienten korrekt waren. Die Information darüber ist Teil der Nachricht, die von der Signalverarbeitungsvorrichtung 1 an das Steuergerät gesandt wurde. Sofern diese Nachricht die Information enthielt, dass ein Fehler aufgetreten ist, folgt auf den Schritt 304 der Schritt 305, in dem wieder ein Sperrzähler auf einen vorgegebenen Wert, beispielsweise 3 gesetzt wird. Sofern die Nachricht keinen Hinweis auf einen Fehler enthielt, folgt auf den Schritt 304 der Schritt 307, in dem überprüft wird, ob der Sperrzähler, der ja beispielsweise im Schritt 305 oder 303 gesetzt wurde, bereits wieder den Wert 0 angenommen hat. Wenn der Sperrzähler noch nicht den Wert 0 angenommen hat, so folgt auf den Schritt 307 der Schritt 308, in dem der Wert des Sperrzählers um 1 verringert wird. Nur wenn der Sperrzähler den Wert 0 aufweist, folgt auf den Schritt 307 der Schritt 309, in dem noch ein zusätzlicher Monitorwert abgefragt wird. Dieser Monitorwert kann von anderen Verfahrensschritten, die hier nicht dargestellt sind, auf einen Wert > 0 gesetzt werden, beispielsweise wenn noch nicht alle Filterkoeffizienten übertragen wurden, wenn andere Fehler vorliegen oder wenn beispielsweise die Klopfregelung in einem Testmodus betrieben wird. Nur wenn dieser Klopfinonitor den Wert 0 aufweist, folgt auf den Schritt 309 der Schritt 310, in dem von dem Steuergerät 10 der übertragene Integratorwert für die Berechnung von Steuergrößen für die Brennkraftmaschine herangezogen wird. D. h. eine tatsächliche Klopferkennung bzw. Klopfregelung erfolgt nur dann, wenn der Integratorwert fehlerfrei übertragen wurde (Schritt 302), gleichzeitig in der Botschaft die Information enthalten ist, dass korrekte Filterkoeffizienten verwendet wurden (Schritt 304), weiterhin die letzte Fehlermeldung ausreichend lange (hier vorgeschlagen drei Ereignisse) zurückliegt (Schritt 307) und weiterhin ein Klopfmonitör (309) eine aktivierte Klopfregelungsfunktion anzeigt. In allen anderen Fällen erfolgt keine Klopfregelung. Nach dem Schritt 305 erfolgt zunächst der Schritt 306, in dem noch einmal der fehlerhafte Filterkoeffizient vom Steuergerät 10 an die Schnittstelle 9 übertragen wird. Nach dem Schritt 306, 310 und 308, und sofern der Klopfmonitor im Schritt 309 als nicht aktiviert erkannt wird, folgt jeweils der Schritt 311. In dem Schritt 311 werden von dem Steuergerät neue Steuerdaten an die Signalverarbeitung 1 gesendet, die die Grundlage für die nächste zu erfolgende Auswertung von Klopfsignalen sind. Nach dem Schritt 311 wird das Verfahren im Schritt 312 beendet.

Dieses Verfahren geht somit davon aus, dass für jede Auswertung von Klopfsignalen entsprechende Steuerdaten von dem Steuergerät 10 an die Signalverarbeitungsvorrichtung 1 gesendet werden. Sofern nur eine einmalige Übertragung vom Steuergerät 10 zur Signalverarbeitungsvorrichtung 1 hin (beispielsweise bei einer Initialisierung) vorgesehen ist können die Verfahrensschritte die von einer wiederholten Übertragung ausgehen einfach weggelassen werden. Weiterhin untersucht das Steuergerät, ob bei der

Übertragung von der Signalverarbeitungsvorrichtung 1 zum Steuergerät 10 hin Fehler aufgetreten sind. Weiterhin wertet das Steuergerät aus, ob die Signalverarbeitungsvorrichtung intern Fehler erkannt hat. Es wird so sichergestellt, dass die Klopfregelung mit äußerst zuverlässigen Daten bezüglich der Klopfereignisse arbeitet. Die Sicherheit der Klopfregelung wird dadurch erhöht.

Die daraufhin von dem Steuergerät 10 oder von der Signalverarbeitungsvorrichtung 1 ergriffenen Ersatzmaßnahmen können auch wieder davon abhängig gemacht werden, wie häufig ein Fehler auftritt. Sofern es nur zu einem einzelnen Fehler kommt, sei es nun durch eine kurzzeitige Störung der Kommunikation zwischen Schnittstelle 9 und Steuergerät 10 oder durch einen einzelnen falschen Filterkoeffizienten, so kann die Klopfregelung nur kurzfristig eingefroren werden, d. h. es würde dann bei sonst gleichen Betriebsbedingungen keine weitere Verstellung des Zündwinkels in Richtung früh erfolgen. Alternativ könnte man auch vorsehen, eine Störung der Klopferkennung wie ein einzelnes Klopfereignis zu werten und bei sonst gleichbleibenden Betriebsbedingungen mit einer geringen Verstellung des Zündwinkels in Richtung spät zu reagieren. Sofern es jedoch zu starken Störungen kommt, insbesondere die Fehlerhäufgkeit stark ansteigt, sollten grundliegendere Ersatzmaßnahmen ergriffen werden. Diese können in einer sogenannten Zündwinkelsicherheitsspätverstellung bestehen, d. h. für den Zündwinkel werden nur noch Bereiche zugelassen, in denen ein Klopfen sicher vermieden werden kann.

## Patentansprüche

1. Signalverarbeitungsvorrichtung (1) zur Verarbeitung von Klopfsignalen einer Brennkraftmaschine, die von Klopfsensoren (2) zur Verfügung gestellt werden, mit mindestens einem Filter (5) zur Filterung der Klopfsignale, wobei die Eigenschaften des Filters (5) durch Filterkoeffizienten beeinflussbar sind, die in einem Speicher (8) in der Signalverarbeitungsvorrichtung (1) gespeichert sind und wobei Mittel vorhanden sind, durch die die gespeicherten Filterkoeffizienten auf ihre Richtigkeit überprüft werden, **dadurch gekennzeichnet, dass** die Filterkoeffizienten als binärer fehlererkennender Code vorliegen, dass Mittel vorgesehen sind, die eine Überprüfung der Filterkoeffizienten anhand des Fehler erkennenden Codes vornehmen und Ersatzmaßnahmen einleiten, wenn die Überprüfung ergibt, dass die Filterkoeffizienten nicht richtig sind, und dass als Ersatzmaßnahme Ersatzwerte für die Filterkoeffizienten verwendet werden, wobei die Ersatzwerte aus dem Speicher (8) ausgelesen werden oder aus Filterkoeffizienten, die nicht fehlerhaft sind, berechnet werden.

2. Signalverarbeitungsvorrichtung nach Anspruch 1, **dadurch gekennzeichnet, dass** Mittel (9) zum Empfang der Filterkoeffizieriten auf einem Eingang und zur Überprüfung der so eingegangenen Filterkoeffizienten vorgesehen sind.

3. Signalverarbeitungsvorrichtung nach einem der vorhergehenden Ansprüche, **dadurch gekennzeichnet, dass** die Signalverarbeitungsvorrichtung (1) zur Zusammenarbeit mit einem Steuergerät (10) ausgebildet ist, wobei das Steuergerät (10) die Filterkoeffizienten erzeugt und dass das Steuergerät (10) zur Beeinflussung von Verbrennungsvorgängen der Brennkraftmaschine auch aufgrund der von der Signalverarbeitungsvorrichtung (1) verarbeiteten Klopfsignale ausgebildet ist.

## Claims

1. Signal processing device (1) for processing knocking signals of an internal combustion engine which are made available by knocking sensors (2), having at least one filter (5) for filtering the knocking signals, wherein the properties of the filter (5) can be influenced by filter coefficients which are stored in a memory (8) in the signal processing device (1), and wherein means are present by which the stored filter coefficients are checked for correctness, **characterized in that** the filter coefficients are present as binary, error-detecting code, **in that** means are provided which perform checking of the filter coefficients on the basis of the code which detects errors, and initiate substitute measures if the checking reveals that the filter coefficients are incorrect, and **in that** substitute values for the filter coefficients are used as a substitute measure, wherein the substitute values are read out of the memory (8) or are calculated from filter coefficients which are not faulty.

2. Signal processing device according to Claim 1, **characterized in that** means (9) for receiving the filter coefficients at an input and for checking the filter coefficients which are input in this way are provided.

3. Signal processing device according to one of the preceding claims, **characterized in that** the signal processing device (1) is designed to cooperate with a control device (10), wherein the control device (10) generates the filter coefficients, and **in that** the control device (10) is also designed to influence combustion processes of the internal combustion engine on the basis of the knocking signals processed by the signal processing device (1).

## Revendications

1. Dispositif de traitement de signaux (1) pour traiter des signaux de battage d'un moteur à combustion interne, qui sont fournis par des capteurs de battage (2), comprenant au moins un filtre (5) pour filtrer les signaux de battage, les propriétés du filtre (5) pouvant être influencées par des coefficients de filtre qui sont mémorisés dans une mémoire (8) dans le dispositif de traitement de signaux (1) et des moyens étant prévus pour contrôler que les coefficients de filtre mémorisés sont corrects, **caractérisé en ce que** les coefficients de filtre se présentent sous forme de code de détection d'erreurs binaire, **en ce que** des moyens sont prévus, lesquels effectuent un contrôle des coefficients de filtre à l'aide du code de détection d'erreurs et introduisent des mesures de remplacement, lorsque le contrôle indique que les coefficients de filtre ne sont pas corrects, et **en ce qu'**en tant que mesure de remplacement, on utilise des valeurs de remplacement pour les coefficients de filtre, les valeurs de remplacement étant lues dans la mémoire (8) ou étant calculées à partir de coefficients de filtre qui ne sont pas erronés.

2. Dispositif de traitement de signaux selon la revendication 1, **caractérisé en ce que** des moyens (9) sont prévus pour recevoir les coefficients de filtre sur une entrée et pour contrôler les coefficients de filtre ainsi entrés.

3. Dispositif de traitement de signaux selon l'une quelconque des revendications précédentes, **caractérisé en ce que** le dispositif de traitement de signaux (1) est réalisé de manière à coopérer avec un appareil de commande (10), l'appareil de commande (10) générant les coefficients de filtre, et **en ce que** l'appareil de commande (10) est réalisé pour influencer des opérations de combustion du moteur à combustion interne également sur la base des signaux de battage traités par le dispositif de traitement de signaux (1).
